# EUROPÄISCHE PATENTANMELDUNG

(11) **EP 3 255 513 A1**
(43) Veröffentlichungstag der Anmeldung: **13.12.2017**
(21) Anmeldenummer: 16173772.1
(22) Anmeldetag: 09.06.2016
(51) Int. Cl.: G05B 19/042, H02P 5/00

(54) **VERFAHREN ZUR ECHTZEITÜBERWACHUNG DES LEISTUNGSVERLAUFS UND/ODER ENERGIEFLUSSES EINER ANTRIEBSEINRICHTUNG UND ANTRIEBSEINRICHTUNG SOWIE COMPUTERPROGRAMM HIERZU**

(71) Anmelder: Gottfried Wilhelm Leibniz Universität Hannover, 30167 Hannover (DE)
(72) Erfinder: Eggers, Kai, 31311 Uetze (DE); Kotlarski, Dr. Jens, 30177 Hannover (DE); Ortmaier, Prof. Dr. Tobias, 30966 Hemmingen (DE); Hansen, Christian, 30167 Hannover (DE)
(74) Vertreter: Gerstein, Hans Joachim

(57) **Zusammenfassung**

Ein Verfahren zur Echtzeitbestimmung des Leistungsverlaufs und/oder Energieflusses einer Antriebseinrichtung (1) mit mehreren miteinander über einen gemeinsamen Zwischenkreis (Z) verbundenen elektrischen Antrieben (Aᵢ) wird beschrieben. Das Verfahren hat die Schritte:
- Ermitteln der jeweiligen elektrischen Antriebsleistung (P_{W,i}) der elektrischen Antriebe (Aᵢ) und
- Bestimmen des Leistungsbedarfs (P_{N}) in Abhängigkeit von der Summe der ermittelten elektrischen Antriebsleistungen (P_{W,i}) der miteinander über den gemeinsamen Zwischenkreis (Z) elektrisch verbundenen Antriebe (Aᵢ).

## Beschreibung

Verfahren zur Echtzeitüberwachung des Leistungsverlaufs und/oder Energieflusses einer Antriebseinrichtung und Antriebseinrichtung sowie Computerprogramm hierzu.

Die Erfindung betrifft ein Verfahren zur Echtzeitüberwachung des Leistungsverlaufs und/oder Energieflusses einer Antriebseinrichtung mit mehreren miteinander über einen gemeinsamen Zwischenkreis verbundenen elektrischen Antrieben.

Die Erfindung betrifft weiterhin eine Antriebseinrichtung mit mehreren elektrischen Antrieben, die über einen gemeinsamen Zwischenkreis miteinander verbunden sind, und mit einer Einheit zur Echtzeitbestimmung des aktuellen Energieverbrauchs der Antriebseinrichtung.

Die Erfindung betrifft weiterhin ein Computerprogramm mit Programmcodemitteln, die zur Bereitstellung eines solchen Verfahrens eingerichtet sind.

Es besteht ein verstärkter Bedarf, den Leistungsverlauf bzw. den Energiefluss von komplexen Antriebseinheiten zu überwachen und zu optimieren. Dabei kann vermehrt auf vernetzte Automatisierungsanlagen mit Steuerungseinheiten zurückgegriffen werden, die unter anderem Verbrauchsdaten der angeschlossenen Verbraucher erhalten. So kann bspw. mit dem PROFIenergy-Protokoll, das auf dem Kommunikationsprotokoll PROFINET der Firma Siemens aufsetzt, das Energiemanagement in Produktionsanlagen verbessert werden. Alle PROFIenergy-Teilnehmer geben dabei ihren aktuellen Leistungsbedarf über eine einheitliche Schnittstelle aus. Anhand von vorgegebenen Pausenzeiten entscheiden die einzelnen Anlagen autark, in welchem Umfang ein energiesparender Betrieb in den Pausenzeiten durchgeführt wird.

C. Hansen, J. Kotlarski und T. Ortmaier: Experimental Validation of Advanced Minimum Energy Robot Trajectory Optimization, in: 16th International Conference on Advanced Robotics (ICAR), Montevideo, 25. - 29. November 2013, Seiten 1 bis 8 beschreiben Versuche zur Energieverbrauchsminimierung von mehrachsigen Robotertrajektorien auf Grundlage der Lösung eines nichtlinearen Optimierungsproblems. Hierzu werden Kostenfunktionen basierend auf einem Energieflussmodell aller Antriebskomponenten eingesetzt. Es ist ein sehr aufwendig zu erstellendes mechanisches Modell unter Berücksichtigung verschiedener mechanischer Systemparameter, wie bspw. Reibkoeffizienten, Massen, Massenträgheitsmomente etc. erforderlich. Zur Ermittlung dieser Systemparameter sind aufwendige Messungen oder Identifikationsverfahren notwendig, welche unter Umständen auch einen Stillstand der Antriebseinrichtung oder spezielle experimentelle Untersuchungen erfordert.

DE 10 2010 021 604 A1 offenbart eine Energieverbrauchsschätzvorrichtung mit einem Ausführungsteil zum Ausführen eines Betriebsprogramms eines Roboters, einem Geschwindigkeitsberechnungsteil zum Berechnen einer Geschwindigkeit eines jeden Antriebsmotors für jede Zeiteinheit, der jede Achse des Roboters antreibt, einem Momentberechnungsteil zum Berechnen eines Moments von jedem Achsenantriebsmotor pro Zeiteinheit, einem Stromwertberechnungsteil zum Berechnen eines Stromwertes, der durch jeden Achsenantriebsmotor fließt, aufgrund des Moments von jedem Antriebsachsenmotor, einem mechanischen Arbeit-Berechnungsteil zum Berechnen einer mechanischen Arbeit von jedem Achsenantriebsmotor, einem Motorwärme-Berechnungsteil zum Berechnen eines Wärmebetrags von jedem Achsenantriebsmotor und einem elektrischen Energie-Abgabeberechnungsteil zum Berechnen der elektrischen Energieabgabe von der Robotersteuerung und einem Steuerungswärmebetrag-Berechnungsteil zum Berechnen eines Wärmebetrags der Robotersteuerung. Mit einem Energieverbrauchs-Berechnungsteil wird der Energieverbrauch pro Zeiteinheit von dem Robotersystem durch Addieren der mechanischen Arbeit und der Wärmebeträge ermittelt. Bei einer solchen simulativen Bestimmung des Energiebedarfs wird die Bekanntheit sämtlicher elektrischer und mechanischer Systemparameter vorausgesetzt. Der Energieverbrauch des Robotersystems kann damit ermittelt werden, ohne tatsächlich das System zu bewegen.

Ausgehend hiervon ist es Aufgabe der vorliegenden Erfindung ein verbessertes Verfahren zur Echtzeitbestimmung des Leistungsverlaufs und/oder Energieflusses einer Antriebseinrichtung und eine entsprechend verbesserte Antriebseinrichtung und einem Computerprogramm hierzu zu schaffen.

Die Aufgabe wird mit dem Verfahren mit den Merkmalen des Anspruchs 1, die Antriebseinrichtung mit den Merkmalen des Anspruchs 10 und das Computerprogramm mit den Merkmalen des Anspruchs 15 gelöst. Vorteilhafte Ausführungsformen sind in den Unteransprüchen beschrieben.

Es wird vorgeschlagen, den Leistungsverlauf und/oder den Energiefluss einer Antriebseinrichtung während des Betriebs in Echtzeit dadurch zu bestimmen, dass die Antriebsleistung der elektrischen Antriebe ermittelt und unter Berücksichtigung des Zwischenkreises und des hierdurch bereitgestellten Energieflusses in Abhängigkeit von der Summe der berechneten Antriebsleistung bestimmt wird.

Unter einem elektrischen Antrieb wird eine elektrische Maschine (Motor, Generator) sowie ggf. in Verbindung mit der zugeordneten Antriebsreglereinheit verstanden, wie z.B. ein Wechselrichter. Ein solcher elektrischer Antrieb kann in der Regel im Motorbetrieb elektrische Leistung aus dem Zwischenkreis in mechanische Leistung umwandeln und umgekehrt im Generatorbetrieb mechanische Leistung in elektrische Leistung umwandeln, die dann in den Zwischenkreis eingespeist wird.

Unter einer Echtzeitbestimmung wird eine Bestimmung des aktuellen Leistungsbedarfs oder Energieflusses in der Antriebseinrichtung zur Laufzeit, d.h. online im laufenden Betrieb verstanden, wobei kleine Zeitverzögerungen unkritisch sind.

Es wurde erkannt, dass eine Berücksichtigung der mechanischen Arbeit z.B. durch aufwendige Modellierung nicht erforderlich ist. Es ist nicht ausreichend, den Leistungsbedarf einer Antriebseinrichtung aus der Energie zu ermitteln, die der Antriebseinrichtung zugeführt wird. Dann bleiben die Energieflüsse zwischen den elektrischen Antrieben unberücksichtigt. Der Leistungsbedarf wird darüber hinaus auch noch durch zusätzliche Verlustleistungen bei der Versorgung der elektrischen Antriebe mit bestimmt.

Es hat sich gezeigt, dass der Leistungsbedarf unter Berücksichtigung des Zwischenkreises in Echtzeit sehr genau bestimmbar ist, wenn dies auf Grundlage der Summe der elektrischen Leistung aller über den gemeinsamen Zwischenkreis miteinander verbundenen elektrischen Antriebe erfolgt. Dabei wird dann nicht nur die den elektrischen Antrieben zugeführte, sondern gegebenenfalls auch im Generatorbetrieb von den elektrischen Antrieben in den Zwischenkreis zurückgespeiste Energie berücksichtigt.

Der Leistungsbedarf kann dann ohne aufwendige Modellierung des mechanischen Verhaltens der Antriebseinrichtung anhand der in einer Steuerungsanlage in der Regel ohnehin vorhandenen Kenngrößen der Antriebseinrichtung auf einfache Weise ermittelt werden. Es muss als einzige Messgröße nur die elektrische Antriebsleistung ermittelt werden. Dies kann durch Strommessung bei bekannter Antriebsspannung, durch Leistungsmessung oder ähnliches an den Zuleitungen der elektrischen Antriebe erfolgen. Unter Umständen ist dann die Ermittlung der elektrischen Antriebsleistung auch ohne eine solche Messung anhand der Regelungsgrößen für die elektrischen Antriebe bestimmbar.

Der Leistungsbedarf kann vorteilhaft aus der Summe der Antriebsleistungen der miteinander über einen gemeinsamen Zwischenkreis verbundenen Antriebsstränge und einer charakteristischen Verlustleistung des Zwischenkreises und einem charakteristischen Wirkungsgrad einer Zwischenkreis-Versorgungseinheit bestimmt werden. Die Verlustleistung des Zwischenkreises und/oder der Wirkungsgrad der Versorgungseinheit können unter Umständen als konstant angenommen werden. Sie sind in der Regel aus den Datenblättern der Versorgungseinheit bekannt oder müssen u.U. lediglich einmalig gemessen werden. Die Verlustleistung ist weiter durch Zusatzverluste außerhalb des Zwischenkreises aufgrund von Komponenten zur Versorgung der Elektronik der Steuerung, von Lüftern, Steuerungsrechner, (Motor-) Haltebremsen etc. bedingt.

Die jeweilige elektrische Antriebsleistung eines elektrischen Antriebs kann auf einfache Weise aus dem Produkt eines ermittelten Motorstroms, einer ermittelten Drehzahl und einer charakteristischen Motorkonstanten für die jeweilige elektrische Maschine bestimmt werden. Die Motorkonstante ist dabei in der Regel aus dem Datenblatt der elektrischen Maschine bekannt. Dieses Produkt wird dann noch mit dem Kehrwert eines charakteristischen Wirkungsgrades der jeweiligen Maschine und eines Wechselrichters multipliziert, um auf diese Weise die elektrische Antriebsleistung zu erhalten, die von einem Wechselrichter aus dem Zwischenkreis bezogen bzw. zurückgespiesen wird.

Die Drehzahl kann die Winkelgeschwindigkeit einer rotierenden Maschine oder äquivalent die Vorschubgeschwindigkeit einer Linearmaschine sein.

Diese elektrischen Versorgungsleistungen des Zwischenkreises können dann einfach für alle über einen gemeinsamen Zwischenkreis miteinander verbundenen elektrischen Antriebsstränge aufsummiert werden, um den Leistungsbedarf der Antriebseinrichtung für einen gesamten Zwischenkreis mit mehreren Antriebssträngen zu erhalten.

Wenn nun zu diesem Leistungsbedarf noch die in der Regel in etwa konstante charakteristische Verlustleistung der Zwischenkreis-Versorgungseinheit hinzuaddiert wird, dann kann der tatsächliche Energieverbrauch der gesamten Antriebseinrichtung auf sehr einfache Weise präzise bestimmt werden.

Die Echtzeitbestimmung kann auf einfache Weise mit geringstmöglichem Messaufwand und Aufwand für Modellierung vorgenommen werden, wenn charakteristische Kenngrößen der elektrischen Antriebe, Wechselrichter, Zwischenkreise und/oder Versorgungseinheiten der Antriebseinrichtung aus einem Speicher einer Steuerungseinheit ausgelesen werden, die zur Ansteuerung der Einrichtung vorgesehen ist. Diese charakteristischen Kenngrößen werden dann zur Bestimmung von charakteristischen Wirkungsgraden aus den ausgelesenen Kenngrößen genutzt, wobei charakteristische Wirkungsgrade auch ausgelesenen Kenngrößen direkt entsprechen können.

Der in Echtzeit bestimmte aktuelle Leistungsverlauf und/oder Energiefluss, der sich aus den mit sehr reduzierten Messungen ermittelten einzelnen Antriebsleistungen ergibt, kann vorteilhaft zur energetischen Optimierung und zur Prognose vom Einspar-/Verbesserungspotenzial genutzt werden. Damit können die mit den Antrieben angesteuerten Prozesse oder die Bewegungen zur Reduzierung des Energieverbrauchs und von Lastspitzen optimiert werden. Dies kann durch Anpassung der Antriebssteuerung, insbesondere des Antriebssteuerungsablaufs, und/oder durch Anpassung der Hardware, z.B. durch Veränderung der im Zwischenkreis vorhandenen Energiespeicher erfolgen.

Zur Durchführung dieses Verfahrens hat die Antriebseinrichtung mehrere über einen gemeinsamen Zwischenkreis verbundene elektrische Antriebe und eine Einheit zur Echtzeitbestimmung des aktuellen Leistungsbedarfs der Antriebseinrichtung. Diese Einheit ist dann zum Ermitteln der jeweiligen elektrischen Antriebsleistung der elektrischen Antriebe und zum Bestimmen des Leistungsbedarfs in Abhängigkeit von der Summe der ermittelten elektrischen Antriebsleistungen der miteinander über den gemeinsamen Zwischenkreis elektrisch verbundenen Antriebe eingerichtet.

Für die elektrischen Antriebe kann jeweils ein Drehzahlsensor (z.B. zur Messung der Winkelgeschwindigkeit einer rotierenden Maschine) vorhanden sein, der zum Messen der aktuellen Drehzahl des jeweiligen elektrischen Antriebs vorgesehen ist. Denkbar ist aber auch, dass die zur Ermittlung der elektrischen Antriebsleistung herangezogene Drehzahl des jeweiligen Antriebs aus einem Drehzahlsollwert einer zur Ansteuerung der Antriebseinrichtung vorgesehene Steuerungseinheit ausgelesen wird.

Die Einheit zur Energieverbrauchsbestimmung kann auch zum Auslesen von charakteristischen Kenngrößen der elektrischen Antriebe, Wechselrichter, Zwischenkreise und/oder Versorgungseinheiten aus dem Speicher einer Steuerungseinheit zur Ansteuerung der Antriebseinrichtung und zum Bestimmen von charakteristischen Wirkungsgraden aus den ausgelesenen Kenngrößen eingerichtet sein. Die Einheit zur Energieverbrauchsbestimmung kann auch Teil der Steuerungseinheit sein.

Die Erfindung wird nachfolgend anhand eines Ausführungsbeispiels mit den beigefügten Zeichnungen näher erläutert. Es zeigen:
Figur 1 - Blockdiagramm einer Antriebseinrichtung und einer Einheit zur Echtzeitbestimmung des Energieverbrauchs dieser Antriebseinrichtung;
Figur 2 - Blockdiagramm der Antriebseinrichtung aus Figur 1 mit den Messstellen zur Erfassung von Messgrößen.

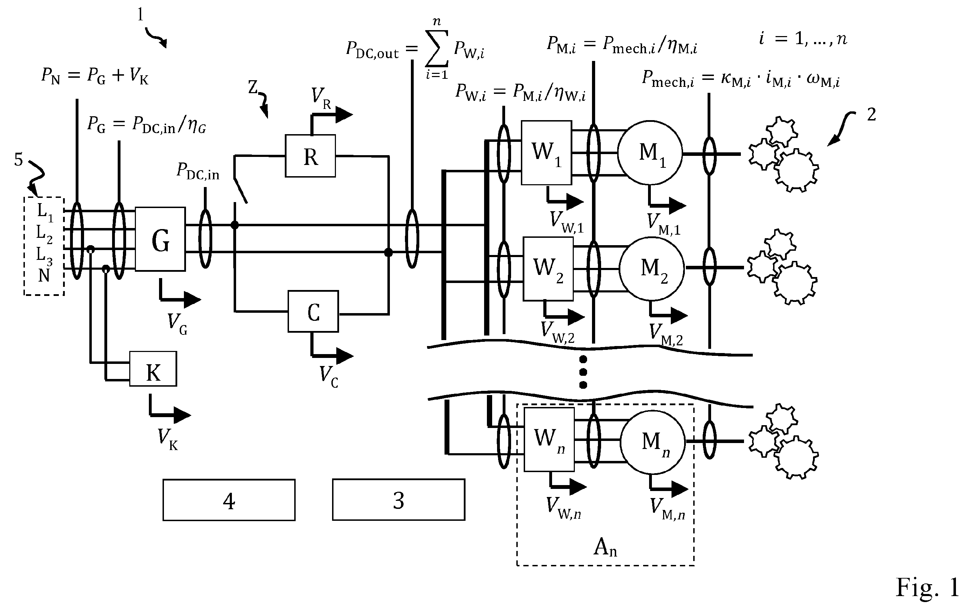

Figur 1 lässt ein Blockdiagramm einer Antriebseinrichtung 1 erkennen, die mehrere elektrische Antriebe (Antriebsstränge) Aᵢ hat, die jeweils aus einem Wechselrichter Wᵢ und einer mit dem jeweiligen Wechselrichter Wᵢ versorgten elektrischen Maschine Mᵢ gebildet sind. Der Index i hat dabei einen ganzzahligen Wert im Bereich von 1 bis n, wobei n die Anzahl der über einen gemeinsamen Zwischenkreis verbundenen Antriebe Aᵢ ist.

Erkennbar ist, dass die Wechselrichter Wᵢ über einen gemeinsamen Zwischenkreis Z miteinander elektrisch verbunden sind, wobei der Zwischenkreis Z einen wahlweise aktivierbaren Bremswiderstand R und eine Zwischenkreiskapazität C zur Zwischenspeicherung elektrischer Energie hat. Der Zwischenkreis Z wird über ein Versorgungseinrichtung G mit elektrischer Leistung über das Spannungsversorgungsnetz 5 versorgt. Das Versorgungsmodul kann ein Gleichrichter sein.

Ferner werden die Zusatzkomponenten K für die Antriebseinrichtung aus dem Spannungsversorgungsnetz 5 gespeist. Die Zusatzkomponenten K umfassen die gesamte Peripherie der Antriebseinrichtung , wie z.B. die Versorgung der Steuerungselektronik, Lüfter, Motorhaltebremsen etc.

Die elektrischen Antriebe Aᵢ mit ihren Antriebsreglereinheiten mit Wechselrichtern Wᵢ und den elektrischen Maschinen Mᵢ sind die Komponenten einer komplexen mechanischen Bewegungseinrichtung 2, wie bspw. eines Industrieroboters oder einer komplexen Industrieanlage mit miteinander zusammenwirkenden elektrischen Antrieben Aᵢ.

Eine solche mechanische Bewegungseinrichtung 2 wird in der dargestellten Weise in der Regel über einen zentralen Energieversorger gespeist, wobei sich mehrere oder gegebenenfalls alle Antriebsachsen in einem Zwischenkreisverbund befinden. Bei der Ermittlung des aktuellen Leistungsverlaufs bzw. Energieflusses können der sich aus dem Zwischenkreisverbund resultierende Energieaustausch und die Speicherkapazität der im Verbund befindlichen Zwischenkreiskondensatoren C sowie Bremswiderstände R nicht vernachlässigt werden. Es ist auch nicht ausreichend, nur den aktuellen Leistungsverbrauch eines solchen Mehrachsverbunds an der Netzeinspeisung des Versorgungsmoduls zu messen. Damit ist zwar der gesamte Leistungsverbrauch bekannt, eine Bewertung der Lasten der im Verbund gekoppelten Einzelachsen einschließlich der Energieverluste der einzelnen elektrischen Antriebe Aᵢ ist nicht möglich. Hierzu wäre eine zusätzliche Messung der einzelnen Eingangsleistungen der Wechselrichter Wᵢ erforderlich, die dann mit zusätzlicher Sensorik und Messstellen ausgerüstet werden müssten.

Um den Leistungsbedarf und den Energiefluss der Antriebseinrichtung 1 in Echtzeit, d.h. online im laufenden Betrieb, so zu ermitteln, dass auch der Leistungsbedarf für die einzelnen Antriebsstränge Aᵢ separat bewertet werden kann, ist eine Einrichtung 3 vorhanden. Diese Einrichtung 3 ist vorzugsweise mit einer in der Regel ohnehin vorhandenen Steuerungseinheit 4 für die Antriebseinrichtung 1 gekoppelt oder als Computerprogramm auf einer solchen (speicherprogrammierbaren) Steuerungseinrichtung 4 implementiert. Dabei kann der Leistungsverlauf und der Energiefluss in Echtzeit durch die Einrichtung 3 ohne eine Berücksichtigung der Mechanik z.B. durch mechanische Systemparameter umfassende Modellierung ermittelt werden. Hierzu werden zunächst die jeweiligen elektrischen Antriebsleistungen P_{W,i} der einzelnen elektrischen Antriebe Aᵢ mit ihren elektrischen Maschinen Mᵢ ermittelt. Dies kann bspw. durch Berechnung der mechanischen Motorleistung P_{mech,i} der elektrischen Maschinen Mᵢ erfolgen, die sich aus dem Produkt des Motorstroms i_{M,i} mit der Drehzahl bzw. Winkelgeschwindigkeit ω_{M,i} und der Motorkonstanten κ_{M,i} ergibt. Die mechanische Motorleistung P_{mech,i} ist an sich aus dem Drehmoment und der Drehzahl bestimmbar.

Die elektrische Motorleistung P_{M,i} der elektrischen Maschine ergibt sich für den motorischen Betrieb als Quotient aus der mechanischen Motorleistung P_{mech,i} und dem unter Umständen betriebspunktabhängigen Wirkungsgrad η_{M,i} der elektrischen Maschine. Für den generatorischen Betrieb wird die elektrische Motorleistung P_{M,i} aus dem Produkt aus mechanischer Motorleistung P_{mech,i} und dem Maschinenwirkungsgrad η_{M,i} ermittelt.

Die elektrische Antriebsleistung P_{W,i} ist weiter durch den unter Umständen betriebspunktabhängigen Wirkungsgrad η_{W,i} des Wechselrichters Wᵢ bestimmt. Sie wird für den motorischen Betrieb als Quotient und für den generatorischen Betrieb als Produkt aus elektrischer Motorleistung P_{M,i} für den Wechselrichter Wᵢ bestimmt.

Die Summe der elektrischen Antriebsleistungen P_{W,i} ist die dem Zwischenkreis Z entnommene oder in den Zwischenkreis Z zurückfließende Leistung P_{DC,out}. Der Leistungsbedarf des Zwischenkreises Z bestimmt sich dann aus dem Summenergebnis P_{DC,out} unter Berücksichtigung der Verlustparameter der Zwischenkreiskapazität Vc und des Bremswiderstandes V_{R} des Zwischenkreises Z. Der Leistungsbedarf P_{G} der Versorgungseinheit G, z.B. eines Gleichrichters kann anhand des Summenergebnisses P_{DC,out} und der Zwischenkreisverluste Vc, V_{R} in Abhängigkeit von dem über den Wirkungsgrad η_{G} beschriebenen Verlustparameter V_{G} des Versorgungsmoduls G berechnet werden.

Der Leistungsbedarf P_{G} der Versorgungseinheit G ergibt sich aus dem Produkt aus dem Eingangsleistungsbedarfs P_{DC,in} des Zwischenkreises Z und dem Wirkungsgrad η_{G} der Versorgungseinheit G. Der Eingangsleistungsbedarf P_{DC,in} des Zwischenkreises Z entspricht im Wesentlichen dem um die Verlustleistungen V_{R}, V_{C} der Bremswiderstände R und Zwischenkreiskapazitäten C bereinigten gesamten Leistungsbedarf P_{DC,out} der an den Zwischenkreis Z angeschlossenen elektrischen Antriebe Aᵢ.

Die gesamte, dem Spannungsversorgungsnetz 5 entnommene oder darin zurückgespeiste Leistung P_{N} ergibt sich aus der Summe des Leistungsbedarfs P_{G} der Zwischenkreis-Versorgungseinheit G und der elektrischen Verluste V_{K} der Zusatzkomponenten K.

Weiterhin werden für die einzelnen Komponenten der Antriebseinrichtung Modellparameter ihrer Verlusteigenschaften berücksichtigt, die entweder aus Datenblättern oder im Datenspeicher der Steuerungseinheit 4 ohnehin abgelegten Steuerparametern bekannt oder durch Messung einmalig bestimmt werden. Somit müssen nur die Motorströme i_{M,i} und die Drehzahlen ω_{M,i} sowie die Zwischenkreisspannung u_{DC} gemessen und die Verlustparameter η_{M,i}, η_{W,i}, κ_{M,i}, V_{C}, V_{K}, η_{G} aus Datenblättern ausgelesen oder einmalig gemessen werden. Anhand dieser wenigen Größen lässt sich dann nicht nur der gesamte Leistungsbedarf, sondern auch der Leistungsverlauf und der Energiefluss durch die Einrichtung 3 online in Echtzeit aktuell bestimmen, indem die für jeden einzelnen Antriebsstrang auf der Basis des gemessenen Motorstroms i_{M,i}, der gemessenen Drehzahlen bzw. Winkelgeschwindigkeiten ω_{M,i} und der Verlustparameter η_{M,i}, η_{W,i}, κ_{M,i}, V_{C}, V_{K}, η_{G} der jeweilige Leistungsbedarf P_{W,i} der elektrischen Antriebe Aᵢ, d.h. der Antriebsstränge bestimmt und aufsummiert wird.

Die Zwischenkreisverluste Vc, V_{R} sind wesentlich von der Zwischenkreisspannung u_{DC} abhängig, sodass die Zwischenkreisspannung u_{DC} einfach als Maß hierfür verwendet werden kann. Die Verlustleistung V_{R} der Bremswiderstände R wird in der Regel über Schwellwerte der Zwischenkreisspannung u_{DC} bestimmt. Bei Überschreitung eines Schwellwertes wird ein Bremswiderstand R zugeschaltet. Während der Zuschaltung ergeben sich Verluste zu V_{R} = u_{DC}2/R. Die Verlustleistung Vc an den Kapazitäten C des Zwischenkreises Z kann in Abhängigkeit von der Zwischenkreisspannung u_{DC} oder näherungsweise auch als konstant angenommen werden.

In Figur 1 werden die Wirkungsgrade im Nenner des Quotienten aus Leistung und Wirkungsgrad berücksichtigt. Dies ist für den motorischen Betrieb gedacht. Im Generatorbetrieb der elektrischen Antriebe Aᵢ müsste ein Generator-Wirkungsgrad berücksichtigt werden, der in der Regel dem Kehrwert des Motor-Wirkungsgrades entspricht. Für den Generatorbetrieb wäre damit das Produkt aus Ausgangsleistung und Wirkungsgrad zu berechnen, um zur Eingangsleistung zu gelangen.

Damit lässt sich der Leistungsbedarf einer Antriebseinrichtung 1 mitsamt der damit verbundenen Leistungsverläufe und Energieflüsse zur Bestimmung der mechanischen Antriebsleistung aus wenigen Messgrößen des Antriebsstrangs in Form der Motorströme und Motordrehzahlen und einfach zu parametrierende Modellgleichungen bestimmen. Diese umfassen Verlustmodelle der elektrischen Maschinen Mᵢ, der Wechselrichter Wᵢ und die Zwischenkreiskopplung Z. Dabei werden folgende Effekte berücksichtigt:
- betriebspunktabhängige Motor- und Wechselrichterverluste
- begrenzte Zwischenkreiskapazität und Zwischenkreisverluste
- Energieaustausch über den Zwischenkreisverbund
- Betriebspunktabhängige Verluste der Versorgungseinheit
- Wärmeabgabe über den Bremswiderstand
- Verluste der Zusatzkomponenten auf Steuerungsebene z.B. zur Versorgung der Steuerungselektronik und der Motor-Haltebremsen.

Die erforderlichen Modellparameter der Verlustmodelle sowie die elektrische Verschaltung des Mehrachsverbundes sind in der Regel nach der Inbetriebnahme der Antriebseinrichtung bekannt und liegen im Speicher einer speicherprogrammierbaren Steuerung vor. Die Parametrierung dieser Energiemodelle kann daher automatisiert erfolgen. Sie kann aber auch manuell mit Informationen aus Datenblättern oder mittels einmaliger Messungen bei der Inbetriebnahme erfolgen.

Bei der Echtzeitbestimmung des Leistungsverlaufes und des Energieflusses der Antriebseinrichtung werden die Verluste sämtlicher Antriebskomponenten und der Zwischenkreiskopplung mehrerer Achsen und die daraus resultierenden Effekte sowie die durch die Zwischenkreiskopplung geschaffene Möglichkeit zum Energieaustausch der Antriebsstränge bei der Berechnung des Gesamt-Leistungsbedarfs berücksichtigt. Hierdurch ist dann bspw. ein Leistungsbedarfs-Monitoring für Einzel- und Mehrachsantriebe unter qualitativer und quantitativer Bestimmung der im Gesamtsystem auftretenden Energieflüsse und des daraus resultierenden Gesamt-Leistungsbedarfs ohne Kenntnisse über die aktuierte Mechanik möglich. Es werden keine Informationen über die aktuierte Last benötigt, da die auftretenden Motormomente direkt aus dem Motorstrom i_{M,i} unter einer Motorkonstante κ_{M,i} berechnet werden. Dies ermöglicht eine Anwendung für jede elektromotorisch angetriebene Maschine.

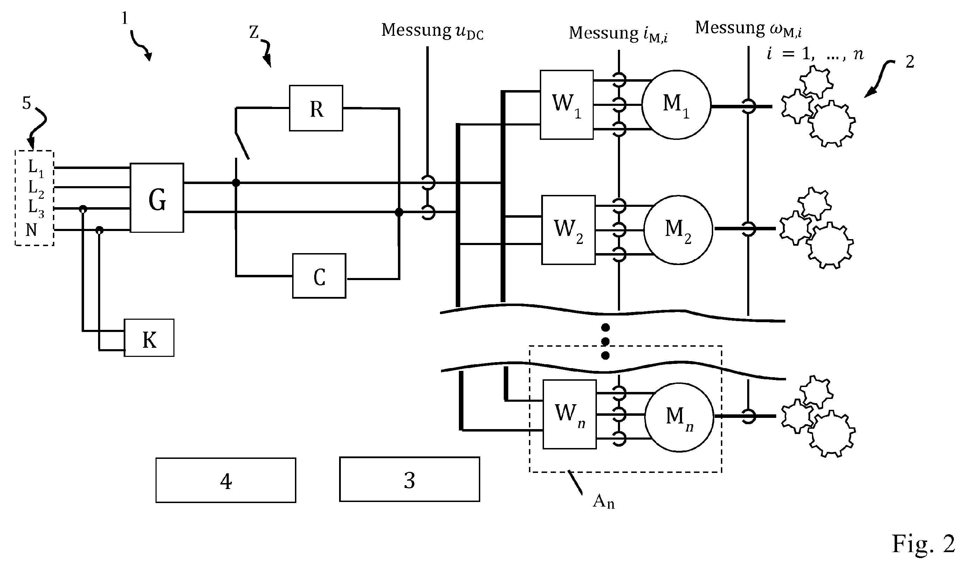

Figur 2 zeigt eine Skizze der Antriebseinrichtung 1 aus Figur 1, mit den benötigten Messstellen zur Messung der Drehzahlen ω_{M,i} der elektrischen Maschinen Mᵢ der Motorströme i_{M,i}, und der Zwischenkreisspannung u_{DC}. Die Drehzahlen ω_{M,i} können entweder gemessen oder aus Steuervorgabewerten entnommen werden.

Mit dem beschriebenen Verfahren und der Einrichtung können Verbrauchsspitzen sowie Verbraucher mit Einsparpotential aufgezeigt und analysiert werden. Das Verfahren unterstützt die z.B. nach den Normen IEC 60034-30 und EN 50598-2 geforderten unterschiedlichen Leistungsbedarfsmessungen zur Angabe der Energieeffizienz elektrischer Antriebe. Die einfache modellgestützte Berechnung aus Sensordaten ist sehr einfach und kostengünstig realisierbar, ohne dass aufwendige Messschnittstellen und Messgeräte erforderlich sind. Ein Nachrüsten der Beobachtungsfunktion ist bei bestehenden Anlagen ohne großen Zusatzaufwand und mit geringem oder unter Umständen sogar ohne Maschinenstillstand möglich.

Damit lässt sich eine energetische Optimierung zur
- Reduzierung des Energiebedarfs aus dem Spannungsversorgungsnetz
- Reduzierung bzw. Vermeidung von Lastspitzen
- Optimierung der Hardware, insbesondere der Energie-Zwischenspeicher
- Verbesserung von Bewegungsabläufen
- Verbesserung von Prozessabläufen
erreichen.

Durch die Echtzeitbestimmung ist der aktuelle Leistungs- und Energiebedarf online verfügbar, sodass weitere Optimierungsverfahren zur Minimierung des Leistungsbedarfs elektrischer Antriebssysteme und ganzer Prozessabläufe durch das Verfahren angesteuert werden können. Hierdurch kann die Energieeffizienz neuer und insbesondere auch bestehender Antriebssysteme gesteigert werden, ohne dass ein hardwareseitiges Nachrüsten der Antriebseinrichtung erforderlich ist. Sowohl das quantitative Monitoring als auch die Energieoptimierung auf Basis von online-Größen unterstützen eine automatisierte, verlustminimale Auswahl, Parametrierung und Verschiebung von Bahnprofilen, eine iterative Optimierung der Profilparametrierung und Profilverschiebung im laufenden Prozess, eine iterativ lernende Ablaufoptimierung von Prozessen, eine Identifikation wesentlicher Verbraucher und ineffizienter (Teil-)Systeme und ein verbessertes Lastspitzenmanagement.

## Patentansprüche

1. Verfahren zur Echtzeitbestimmung des Leistungsverlaufs und/oder Energieflusses einer Antriebseinrichtung (1) mit mehreren miteinander über einen gemeinsamen Zwischenkreis (Z) verbundenen elektrischen Antrieben (Aᵢ), **gekennzeichnet durch**
- Ermitteln der jeweiligen elektrischen Antriebsleistung (P_{W,i}) der elektrischen Antriebe (Aᵢ) und
- Bestimmen des Leistungsbedarfs (P_{N}) in Abhängigkeit von der Summe der ermittelten elektrischen Antriebsleistungen (P_{W,i}) der miteinander über den gemeinsamen Zwischenkreis (Z) elektrisch verbundenen Antriebe (Aᵢ).

2. Verfahren nach Anspruch 1, **gekennzeichnet durch** Bestimmen des Leistungsbedarfs (P_{N}) aus der Summe (P_{DC,out}) der ermittelten elektrischen Antriebsleistungen (P_{W,i}) der miteinander über einen gemeinsamen Zwischenkreis (Z) verbundenen Antriebsstränge, einer Verlustleistung (Vc) des Zwischenkreises (Z) und einem charakteristischen Wirkungsgrad (η_{G}) einer Versorgungseinheit (G).

3. Verfahren nach Anspruch 2, **gekennzeichnet durch** Bestimmen der charakteristischen Verlustleistung der Versorgungseinheit (G) aus der Summe der Verlustleistung (V_{R}) von Bremswiderständen (R) und der Verlustleistung (V_{C}) von Zwischenkreiskapazitäten (C).

4. Verfahren nach einem der Ansprüche 1 bis 3, **gekennzeichnet durch** Messen der jeweiligen Motorströme (i_{M,i}) einer elektrischen Maschine (Mᵢ) des elektrischen Antriebs (Aᵢ) und Ermitteln der jeweiligen mechanischen Maschinenleistung (P_{mech,i}) der elektrischen Maschine (Mᵢ) als Produkt des Motorstroms (i_{M,i}) mit der gemessenen oder aus einer Steuerungseinheit bekannten Drehzahl (ω_{M,i}) der elektrischen Maschine (Mᵢ) und einer für die elektrischen Maschine (Mᵢ) charakteristischen Motorkonstanten (K_{M, i}).

5. Verfahren nach Anspruch 4, **gekennzeichnet durch** Bestimmen der jeweiligen elektrischen Antriebsleistung (P_{W,i}) eines elektrischen Antriebs (Aᵢ) aus dem Produkt oder Quotienten der ermittelten mechanischen Maschinenleistung (P_{mech,i}) und einem charakteristischen Wirkungsgrad (η_{M,i}) der jeweiligen elektrischen Maschine (Mᵢ) und eines charakteristischen Wirkungsgrades (η_{W,i}) eines Wechselrichters (Wᵢ) für die elektrische Maschine (Mᵢ).

6. Verfahren nach einem der Ansprüche 1 bis 4, **gekennzeichnet durch** Ermitteln der jeweiligen Antriebsleistung oder elektrischen Motorleistung (P_{W,i}, P_{M,i}) aus aktuellen Regelungswerten einer Regelungseinheit, die zur Ansteuerung des elektrischen Antriebs (Aᵢ) vorliegen.

7. Verfahren nach einem der vorhergehenden Ansprüche, **gekennzeichnet durch** Bestimmen des Leistungsbedarfs (P_{N}) weiterhin in Abhängigkeit der sich aus der resultierenden Summe der berechneten Leistungen (P_{W,i}) der elektrischen Antriebe (Aᵢ) ergebenden Leistung (P_{DC,out}), die in den Zwischenkreis (Z) fließt oder dem Zwischenkreis (Z) entnommen wird und der Verlustleistung (Vc) des Zwischenkreises (Z) über Kapazitäten (C), den Verlusten (V_{R}) **durch** Energiedissipation über mindestens einen Bremswiderstand (R) und den Verlusten (V_{G}) der Versorgungseinheit mit Gleichrichter (G) anhand eines für diese Versorgungseinheit charakteristischen Wirkungsgrades (η_{G}).

8. Verfahren nach einem der vorhergehenden Ansprüche, **gekennzeichnet durch** Auslesen von charakteristischen Kenngrößen der elektrischen Antriebe (Aᵢ), Antriebsregler mit Wechselrichter (Wᵢ), Zwischenkreise (Z) und/oder Versorgungseinheiten mit Gleichrichter (G) aus dem Datenspeicher einer Steuerungseinrichtung (4)zur Ansteuerung der Antriebseinrichtung (1) und Bestimmen von charakteristischen Wirkungsgraden (η_{M,i}, η_{W,i},η_{G}) aus den ausgelesenen Kenngrößen.

9. Verfahren nach einem der vorhergehenden Ansprüche, **gekennzeichnet durch** Optimierung der Antriebsansteuerung, insbesondere zur energetischen Optimierung der mit den elektrischen Antrieben (Aᵢ) durchgeführten Prozesse und/oder ausgeführten Bewegungsabläufe, in Abhängigkeit von den ermittelten aktuellen Leistungsverläufen und/oder Energieflüssen.

10. Antriebseinrichtung (1) mit mehreren elektrischen Antrieben (Aᵢ), die über einen gemeinsamen Zwischenkreis (Z) miteinander verbunden sind, und mit einer Einheit (3) zur Echtzeitbestimmung des aktuellen Leistungsverlaufs und/oder Energieflusses der Antriebseinrichtung (1), **dadurch gekennzeichnet, dass** die Einheit (3) zum
- Ermitteln der jeweiligen elektrischen Antriebsleistung (P_{W,i}) der elektrischen Antriebe (Aᵢ) und
- Bestimmen des Leistungsbedarfs (P_{N}) in Abhängigkeit von der Summe (P_{DC,out}) der ermittelten elektrischen Antriebsleistungen (P_{W,i}) der miteinander über den gemeinsamen Zwischenkreis (Z) elektrisch verbundenen Antriebe (Aᵢ).
eingerichtet ist.

11. Antriebseinrichtung nach Anspruch 10, **gekennzeichnet durch** Strommesseinheiten zur Messung der jeweils aktuell fließenden Motorströme (i_{M,i}) der elektrischen Antriebe (Aᵢ), wobei die Einheit (3) zur Echtzeitbestimmung des aktuellen Leistungsbedarfs (P_{N}) **durch** Ermittlung der jeweiligen elektrischen Antriebsleistung (P_{W,i}) eines elektrischen Antriebs (Aᵢ) als Produkt des gemessenen aktuellen Motorstroms (i_{M,i}) des Antriebs (Aᵢ) mit der Drehzahl (ω_{M,i}) des Antriebs (Aᵢ) und einer für den elektrischen Antrieb (Aᵢ) charakteristischen Motorkonstanten (κ_{M,i}), sowie in Abhängigkeit des Wirkungsgrades (η_{M,i}) der elektrischen Maschine (Mᵢ) und des Wirkungsgrades (η_{W,i}) des Wechselrichters (Wᵢ) des elektrischen Antriebes (Aᵢ) zu ermitteln.

12. Antriebseinrichtung (1) nach Anspruch 11, **dadurch gekennzeichnet, dass** die Einheit zur Energie- und Leistungsbedarfsbestimmung zum Messen der aktuellen Drehzahl der elektrischen Antriebe (Aᵢ) oder Bestimmen der Drehzahl (ω_{M,i}) aus einem Drehzahlsollwert einer Steuerungseinheit (4) zur Ansteuerung der Antriebseinrichtung eingerichtet ist.

13. Antriebseinrichtung (1) nach einem der Ansprüche 10 bis 12, **dadurch gekennzeichnet, dass** die Einheit (3) zum Auslesen von charakteristischen Kenngrößen der elektrischen Antriebe (Aᵢ), Zwischenkreise (Z) und/oder Versorgungseinheiten (G) aus dem Datenspeicher einer Steuerungseinheit (4) zur Ansteuerung der Antriebseinrichtung und zum Bestimmen von charakteristischen Wirkungsgraden (η_{W,i}, η_{M,i},η_{G}) aus den ausgelesenen Kenngrößen eingerichtet ist.

14. Antriebseinrichtung nach einem der Ansprüche 10 bis 13, **dadurch gekennzeichnet, dass** die Einheit (3) zur Durchführung des Verfahrens nach einem der Ansprüche 1 bis 9 eingerichtet ist.

15. Computerprogramm mit Programmcodemitteln, die zur Durchführung des Verfahrens nach einem der Ansprüche 1 bis 9 eingerichtet sind, wenn das Computerprogramm auf einer Datenverarbeitungseinrichtung ausgeführt wird.
